# EUROPEAN PATENT APPLICATION

(11) **EP 4 575 969 A1**
(43) Date of publication of application: **25.06.2025**
(21) Application number: 23859460.0
(22) Date of filing: 31.08.2023
(51) Int. Cl.: G06Q 40/04, G06Q 20/36, G06Q 20/38

(54) **DIGITAL CURRENCY TRANSACTION METHOD, APPARATUS, DEVICE, AND SYSTEM**

(30) Priority: 01.09.2022 CN 202211066886
(71) Applicant: Digital Currency Institute, The People's Bank of China, Beijing 100071 (CN)
(72) Inventor: MU, Changchun, Beijing 100071 (CN); DI, Gang, Beijing 100071 (CN); LYU, Yuan, Beijing 100071 (CN); XU, Kefeng, Beijing 100071 (CN); YU, Peng, Beijing 100071 (CN); CUI, Peidong, Beijing 100071 (CN); PENG, Meiling, Beijing 100071 (CN); GUO, Wei, Beijing 100071 (CN); LIANG, Wei, Beijing 100071 (CN); CHEN, Song, Beijing 100071 (CN)
(74) Representative: Winter, Brandl - Partnerschaft mbB
(86) International application number: PCT/CN2023/116244
(87) International publication number: WO 2024/046432

(57) **Abstract**

A digital currency transaction method, comprising: when a first transaction terminal is in an unpowered state, in response to a transaction request sent by a second transaction terminal, sending transaction feedback information to the second transaction terminal by a hardware wallet, wherein the unpowered state indicates that the first transaction terminal is in a power-off state, an electric quantity of a power supply in the first transaction terminal is greater than an electric quantity required by the hardware wallet for working, the transaction feedback information comprises an identifier of the target account, the target account is an account on the first transaction terminal, and the transaction feedback information is configured to instruct the second transaction terminal to send the transaction request and the identifier of the target account to a digital currency server; and the digital currency server performs a digital currency transaction between the first transaction terminal and the second transaction terminal according to the transaction request and the identifier of the target account. According to the method, a digital currency transaction can be performed even when a smart phone is in a power-off state.

## Description

The present application claims priority to Chinese Patent Application No. 202211066886.0 China National Intellectual Property Administration on 01 September 2022, which is incorporated herein by reference in its entirety.

### Technical Field

The present disclosure relates to the technical field of computers, and in particular to a digital currency transaction method, apparatus, device, and a storage medium.

### Background

With the increasing popularity of smart phones and the increasing maturity of mobile network construction, mobile phone network-based payment methods have been widely used, and thus the transaction of digital goods has been developed. However, in practical applications, online payment based on a mobile phone network needs to be performed when a smart phone is in a power-on state; and when the smart phone is in a power-off state, for example, the smart phone automatically powers off when the electric quantity of the smart phone is insufficient, a user cannot implement online payment by using the smart phone, so as to perform digital currency transaction.

### Summary

In one aspect, some embodiments of the present disclosure provide a digital currency transaction method, applied to a hardware wallet which is provided in a first transaction terminal. The method includes: when the first transaction terminal is in an unpowered state, sending, in response to a transaction request sent by a second transaction terminal, transaction feedback information to the second transaction terminal by the hardware wallet, wherein the unpowered state indicates that the first transaction terminal is in a power-off state, an electric quantity of a power supply in the first transaction terminal is greater than an electric quantity required by the hardware wallet for working, the transaction feedback information includes an identifier of the target account, the target account is an account on the first transaction terminal, and the transaction feedback information is configured to instruct the second transaction terminal to send the transaction request and the identifier of the target account to a digital currency server; and so that the digital currency server performs a digital currency transaction between the first transaction terminal and the second transaction terminal according to the transaction request and the identifier of the target account.

In some embodiments, the method further includes: when the first transaction terminal is in a power-on state, generating unpowered transaction enabling information in response to an unpowered transaction enabling instruction of the target account; and sending the unpowered transaction enabling information to the digital currency server, wherein the unpowered transaction enabling information includes an unpowered transaction parameter of the target account and the identifier of the target account, and the unpowered transaction enabling information is configured to instruct the digital currency server to set the unpowered transaction parameter of the target account and activate an unpowered payment service of the target account.

In some embodiments, the transaction feedback information further includes a digital currency payment identifier and an unpowered payment identifier, and sending, in response to the transaction request sent by the second transaction terminal, transaction feedback information to the second transaction terminal by the hardware wallet includes: acquiring a state of the first transaction terminal by the hardware wallet, so as to determine that the first transaction terminal is in the unpowered state; receiving, by the hardware wallet, the transaction request sent by the second transaction terminal; and feeding back, to the second transaction terminal, the transaction feedback information including the digital currency payment identifier, the unpowered payment identifier and the identifier of the target account.

In some embodiments, generating the unpowered transaction enabling information in response to the unpowered transaction enabling instruction of the target account includes: receiving a Personal Identification Number (PIN) of the target account; sending the PIN to the digital currency server to obtain the identifier of the target account from the digital currency server; receiving the unpowered transaction parameter set by the target account; and generating the unpowered transaction enabling information according to the unpowered transaction parameter and the identifier of the target account.

In some embodiments, the hardware wallet includes a Secure Element (SE) in which a card application is deployed, and the method further includes: after the first transaction terminal is powered off, performing contactless activation on the card application in the SE; and after the first transaction terminal is powered on, performing contactless deactivation on the card application in the SE.

In another aspect, some embodiments of the present disclosure provide a digital currency transaction method, which is applied to a digital currency server. The method includes: receiving unpowered transaction enabling information sent by a first transaction terminal, wherein the unpowered transaction enabling information includes an unpowered transaction parameter of a target account and an identifier of the target account; activating an unpowered payment service of the target account on the basis of the unpowered transaction parameter of the target account and the identifier of the target account; receiving a transaction request and the identifier of the target account sent by a second transaction terminal; and performing a digital currency transaction between the first transaction terminal and the second transaction terminal on the basis of the transaction request and the identifier of the target account.

In some embodiments, the method further includes: receiving a PIN of the target account sent by the first transaction terminal; verifying the PIN; obtaining the identifier of the target account when verification of the PIN is passed; and sending the identifier of the target account to the first transaction terminal.

In some embodiments, activating the unpowered payment service of the target account on the basis of the unpowered transaction parameter of the target account and the identifier of the target account includes: when the verification of the PIN is passed, updating the unpowered transaction parameter of the target account, so as to adjust the unpowered payment service of the target account to an activated state; and feeding back an activation result to the first transaction terminal.

In some embodiments, performing the digital currency transaction between the first transaction terminal and the second transaction terminal on the basis of the transaction request and the identifier of the target account includes: determining the activation state of the unpowered payment service of the target account according to the identifier of the target account; when the activation state is activated, verifying a current transaction according to the transaction request and the unpowered transaction parameter of the target account; and performing the digital currency transaction between the first transaction terminal and the second transaction terminal when the verification is passed.

In some embodiments, the unpowered transaction parameter includes an unpowered transaction limit and an unpowered transaction rimes, the transaction request includes a current transaction limit; and verifying the current transaction according to the transaction request and the unpowered transaction parameter of the target account includes: determining that the verification is passed when the unpowered transaction limit is greater than or equal to the current transaction limit, and the current transaction times is less than or equal to the unpowered transaction times.

In some embodiments, performing the digital currency transaction between the first transaction terminal and the second transaction terminal includes: sending the transaction request to an operator backend system corresponding to the target account, so that the operator backend system corresponding to the target account updates a digital currency in the target account.

In some embodiments, performing the digital currency transaction between the first transaction terminal and the second transaction terminal includes: sending the transaction request to the operator backend system corresponding to the target account, so that the operator backend system corresponding to the target account updates a digital currency in the target account, and an operator backend system corresponding to the second transaction terminal updates a digital currency in an account corresponding to the second transaction terminal.

In some embodiments, after performing the digital currency transaction between the first transaction terminal and the second transaction terminal, the method further includes: feeding back a transaction result to the second transaction terminal, wherein the transaction result is configured to reflect that the digital currency server successfully performs the digital currency transaction between the first transaction terminal and the second transaction terminal.

In still another aspect, some embodiments of the present disclosure provide a digital currency transaction system, including a first transaction terminal, a second transaction terminal and a digital currency server, wherein the first transaction terminal includes a hardware wallet; the first transaction terminal is configured to generate unpowered transaction enabling information in response to an unpowered transaction enabling instruction of a target account when the first transaction terminal is in a power-on state, wherein the unpowered transaction enabling information includes an unpowered transaction parameter of the target account and an identifier of the target account, and the unpowered transaction enabling information is configured to instruct the digital currency server to set the unpowered transaction parameter of the target account and activate an unpowered payment service of the target account; the first transaction terminal is further configured to send the unpowered transaction enabling information to the digital currency server; the second transaction terminal is configured to send a transaction request to the first transaction terminal after the first transaction terminal is powered off; the first transaction terminal is further configured to send, in response to the transaction request sent by the second transaction terminal, transaction feedback information to the second transaction terminal by the hardware wallet, wherein the transaction feedback information includes the identifier of the target account; the second transaction terminal is further configured to send the transaction request and the identifier of the target account to the digital currency server; and the digital currency server is configured to perform a digital currency transaction between the first transaction terminal and the second transaction terminal according to the transaction request and the identifier of the target account.

In still another aspect, some embodiments of the present disclosure provide a digital currency transaction apparatus, which is applied to a hardware wallet, the hardware wallet is provided in a first transaction terminal, the digital currency transaction apparatus includes a sending unit, the sending unit is configured to send, when the first transaction terminal is in an unpowered state and in response to a transaction request sent by a second transaction terminal, transaction feedback information to the second transaction terminal by means of a hardware wallet, wherein the unpowered state indicates that the first transaction terminal is in a power-off state, the electric quantity of a power supply in the first transaction terminal is greater than an electric quantity required by the hardware wallet for working, the transaction feedback information includes an identifier of the target account, the target account is an account on the first transaction terminal, and the transaction feedback information is configured to instruct the second transaction terminal to send the transaction request and the identifier of the target account to a digital currency server; and so that the digital currency server performs a digital currency transaction between the first transaction terminal and the second transaction terminal according to the transaction request and the identifier of the target account.

In still another aspect, some embodiments of the present disclosure provide a digital currency transaction apparatus, which is applied to a digital currency server, the digital currency transaction apparatus includes a receiving unit and a processing unit; the receiving unit is configured to receive unpowered transaction enabling information sent by a first transaction terminal, wherein the unpowered transaction enabling information includes an unpowered transaction parameter of a target account and an identifier of the target account; the processing unit is configured to activate an unpowered payment service of the target account on the basis of the unpowered transaction parameter of the target account and the identifier of the target account; the receiving unit is further configured to receive a transaction request and the identifier of the target account sent by a second transaction terminal; and the processing unit is further configured to perform a digital currency transaction between the first transaction terminal and the second transaction terminal on the basis of the transaction request and the identifier of the target account.

In still another aspect, some embodiments of the present disclosure provide an electronic device, including: a memory, a processor, and a computer program stored on the memory and capable of running on the processor, wherein the computer program, when executed by the processor, implements the digital currency transaction method as stated in the first aspect or the digital currency transaction method as stated in the second aspect.

In still another aspect, some embodiments of the present disclosure provide a computer readable storage medium, storing a computer program which, when executed by a processor, implements the digital currency transaction method as stated in the first aspect or the digital currency transaction method as stated in the second aspect.

### Brief Description of the Drawings

Fig. 1 is a structural diagram of a digital currency transaction system according to some embodiments;
Fig. 2 is a structural diagram of a first transaction terminal according to some embodiments;
Fig. 3 is a flowchart I of a digital currency transaction method according to some embodiments;
Fig. 4 is an unpowered payment mode switching diagram according to some embodiments;
Fig. 5 is a flowchart II of a digital currency transaction method according to some embodiments;
Fig. 6 is a flowchart III of a digital currency transaction method according to some embodiments;
Fig. 7 is a flowchart IV of a digital currency transaction method according to some embodiments;
Fig. 8 is a flowchart V of a digital currency transaction method according to some embodiments;
Fig. 9 is a structural diagram I of a digital currency transaction apparatus according to some embodiments;
Fig. 10 is a structural diagram II of a digital currency transaction apparatus according to some embodiments;
Fig. 11 is a structural diagram of an electronic device according to some embodiments.

### Detailed Description of the Embodiments

In order to make a person skilled in the art better understand the technical solutions of the present application, hereinafter, the technical solutions in the embodiments of the present application will be described clearly and thoroughly with reference to the accompanying drawings.

It is to be noted that terms "first", "second" and the like in the description, claims and the abovementioned drawings of the application are used for distinguishing similar objects rather than describing a specific sequence or a precedence order. It should be understood that the data used in such a way may be exchanged where appropriate, in order that the embodiments of the application described here can be implemented in a sequence other than sequences graphically shown or described here. Implementations described in the following exemplary embodiments do not represent all implementations consistent with the present application. On the contrary, they are merely examples of apparatuses and methods consistent with some aspects of the present application as detailed in claims.

In addition, in the description of the embodiments of the present disclosure, unless otherwise stated, a character "/" generally indicates that contextual objects are in an "or" relationship, for example, A/B may mean A or B. Herein, the term "and/or" merely describes an associated relationship of associated objects, and means that there may be three relationships. For example, the expression "A and/or B" may mean that A exists alone, A and B exist at the same time, and B exists alone. In addition, in the description of the embodiments of the present disclosure, "a plurality of" refers to two or more than two.

Before explaining the embodiments of the present application in details, some technical terms involved in the embodiments of the present application are introduced first.

Digital Currency (DC) is an alternative currency in the form of an electronic currency. For example, E-CNY is issued by the People's Bank of China, operated by designated institutions, and exchanged by the public. It is based on a broad account system, supports the loosely coupled function of the bank account, is equivalent to banknotes and coins, and is a controllable and anonymous payment tool with value characteristics and legal tender status.

The Near Field Communication (NFC) technology is developed on the basis of a non-contact Radio Frequency Identification (RFID) technology combined with a wireless interconnection technology. As an important wireless communication technology, the NFC provides a non-contact wireless communication solution, that is, two devices can complete data communication when they are close to each other, allowing consumers to exchange information, access and services more quickly and intuitively. With its security, low power consumption, and other features, the NFC has become the main technology adopted for short-range communication.

A Secure Element (SE) is typically provided in the form of chips. The SE is equivalent to a microcomputer, and implements functions, such as reliable data storage, encryption and decryption operations, by means of a security chip and a Chip Operating System (COS).

With the development of digital currency technology, a hardware wallet technology has emerged. A hardware wallet refers to storing the digital currency separately in a chip, isolated from the Internet, and is ready to use by simply plugging it in.

In an actual application, a secure element is generally provided in the hardware wallet, and the functions of the hardware wallet are implemented by means of the secure element.

With the rapid development of mobile smart terminals (including smart phones, smart watches, and smart POS (Point of Sales, which is collectively referred to as a point of sale information management system)), the NFC function has been widely applied in the financial payment field of smart terminals. When purchasing goods or services, a consumer uses the NFC technology to complete payment by means of a smart terminal in real time, which is fast and safe. The core of the NFC payment system is the SE, which is responsible for ensuring the security of the payment system. As a carrier of the financial account, the SE is also the core of the NFC payment system and can be solidified in a smart phone.

However, in general, when a smart phone is in a power-off state, for example, the smart phone automatically powers off when the electric quantity of the smart phone is insufficient, a user cannot implement online payment by using the smart phone, thereby affecting digital currency transactions.

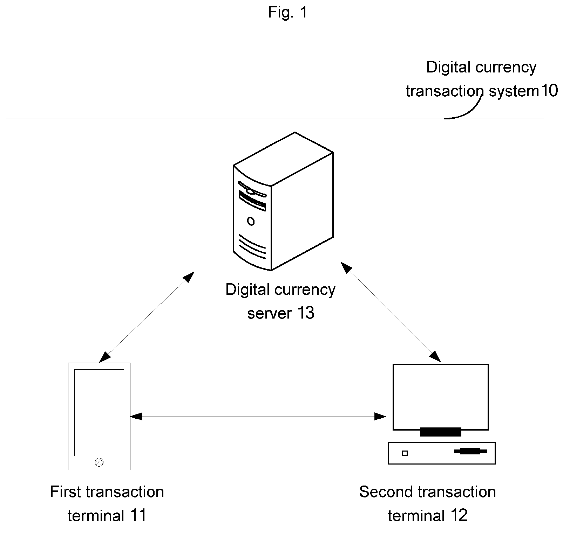

For the problem, the digital currency transaction method provided in the embodiments of the present disclosure enables a user to use an SE-based transaction terminal to perform unpowered payment. The digital currency transaction method provided in the embodiments of the present application can be applied to a digital currency transaction system. Fig. 1 shows a structural schematic diagram of the digital currency transaction system. As shown in Fig. 1, a digital currency transaction system 10 includes a first transaction terminal 11, a second transaction terminal 12 and a digital currency server 13. The first transaction terminal 11, the second transaction terminal 12 and the digital currency server 13 can communicate with each other, and the communication modes of the first transaction terminal 11, the second transaction terminal 12 and the digital currency server 13 include wired communication or wireless communication.

The first transaction terminal 11 is a terminal device used by a target account, for example, the first transaction terminal 11 may be a smart phone, a smart watch, etc., and the target account may be a customer account. A hardware wallet is provided in the first transaction terminal 11, and the hardware wallet may built in the first transaction terminal 11 in the form of a SE. That is, the hardware wallet and the SE may be the same device, and when the hardware wallet is configured to the first transaction terminal, the hardware wallet and the SE may also be regarded as the same device.

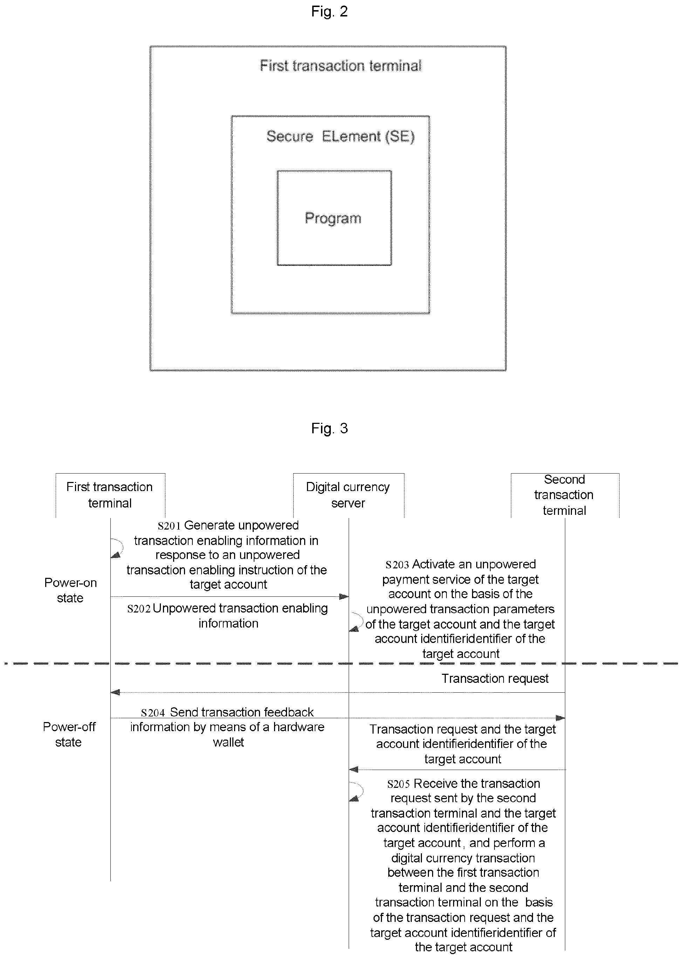

Fig. 2 shows a schematic structural diagram of the first transaction terminal 11. A SE is installed on the first transaction terminal 11, and a preset payment function program is stored in the SE. When the first transaction terminal 11 is in a power-on state, the first transaction terminal 11 may generate unpowered transaction enabling information in response to an unpowered transaction enabling instruction of the target account, and send the unpowered transaction enabling information to a digital currency server. The SE may sense the power-on/power-off state of the first transaction terminal 11, after the first transaction terminal 11 is powered off, the SE may enable the preset payment function program and perform payment on the basis of an NFC technology, that is, the first transaction terminal 11 sends, in response to a transaction request sent by the second transaction terminal, transaction feedback information to the second transaction terminal by the SE.

The second transaction terminal 12 is a terminal device used by another party that performs transaction with the target account, for example, the second transaction terminal 12 may be a Point of Sales (POS) device used by a payee (such as a merchant), and is also referred to as a POS machine. After the first transaction terminal 11 is powered off, the second transaction terminal 12 may be used to send a transaction request to the first transaction terminal 11, for example, the second transaction terminal 12 sends a receipt instruction to the first transaction terminal 11 on the basis of the NFC technology.

The digital currency server 13 may be a server corresponding to the bank. The digital currency server 13 is configured to receive the unpowered transaction enabling information sent by the first transaction terminal, and activate an unpowered payment service of the target account on the basis of the unpowered transaction parameter of the target account and the identifier of the target account. The digital currency server 13 is further configured to receive the transaction request and the identifier of the target account sent by the second transaction terminal, and perform a digital currency transaction between the first transaction terminal and the second transaction terminal on the basis of the transaction request and the identifier of the target account.

In addition, it should be noted that the account information involved in the present application (including but not limited to an identifier of the target account, an unpowered transaction parameter, a transaction request, etc.) is information that is authorized by a user or fully authorized by various parties.

Fig. 3 is a flow diagram of a digital currency transaction method according to some embodiments. In some embodiments, the digital currency transaction method can be applied to devices in the digital currency transaction system as shown in Fig. 1, such as the first transaction terminal, the second transaction terminal and the digital currency server, and can also be applied to other similar devices.

As shown in Fig. 3, the digital currency transaction method provided in the embodiment of the present disclosure includes steps 201-205 below.

Step 201, when a first transaction terminal is in a power-on state, the first transaction terminal generates unpowered transaction enabling information in response to an unpowered transaction enabling instruction of the target account.

The unpowered transaction enabling information includes an unpowered transaction parameter of the target account and an identifier of the target account, and the unpowered transaction enabling information is configured to instruct the digital currency server to set the unpowered transaction parameter of the target account and activate an unpowered payment service of the target account.

In some embodiments, the first transaction terminal generates the unpowered transaction enabling information in response to the unpowered transaction enabling instruction inputted by the target account in the digital currency application.

It should be noted that the first transaction terminal is in a power-on state, that is, a state in which the first transaction terminal works normally after being powered on and started. The digital currency application program is a digital currency application (APP) provided in the first transaction terminal.

In some embodiments, the target account performs identity verification on the digital currency APP, and after the identity verification is passed, settings related to unpowered payment is performed on the digital currency APP. For example, the target account inputs a Personal Identification Number (PIN) on a digital currency APP, and the first transaction terminal sends the PIN to the digital currency server to obtain the identifier of the target account from the digital currency server. After identity verification is passed, the target account sets an unpowered transaction parameter on the digital currency APP; and the first transaction terminal receives the unpowered transaction parameter set by the target account, and uses the unpowered transaction parameter and the identifier of the target account as the unpowered transaction enabling information.

In some embodiments, the target account may also perform short message verification on the digital currency APP, and after the short message verification is passed, the target account performs settings related to unpowered payment on the digital currency APP.

Step 202: the first transaction terminal sends the unpowered transaction enabling information to the digital currency server.

As a possible implementation, the first transaction terminal sends the unpowered transaction enabling information to the digital currency server by a wireless network.

Accordingly, the digital currency server receives the unpowered transaction enabling information.

Step 203: the digital currency server activates an unpowered payment service of the target account on the basis of the unpowered transaction parameters of the target account and the identifier of the target account.

As a possible implementation, after receiving the unpowered transaction enabling information, the digital currency server acquires the unpowered transaction parameter of the target account and the identifier of the target account from the unpowered transaction enabling information, and adjusts the unpowered payment service of the target account according to the unpowered transaction parameter of the target account, so as to activate the unpowered payment service of the target account.

In some embodiments, the unpowered transaction parameter includes an unpowered transaction limit (also referred to as a total amount of a password-free transaction) and an unpowered transaction times (also referred to as an upper limit of the number of unpowered transactions), there is an initial unpowered payment transaction parameter when an unpowered payment service is enabled; and when the target account has adjusted the unpowered transaction parameter when enabling the unpowered payment service, the digital currency server updates the initial unpowered transaction parameter on the basis of the adjusted unpowered transaction parameter of the target account.

Step 204: when the first transaction terminal is in an unpowered state, the first transaction terminal sends, in response to a transaction request sent by the second transaction terminal, transaction feedback information to the second transaction terminal by the hardware wallet.

The unpowered state is a state indicates that the first transaction terminal is in a power-off state and an electric quantity of a power supply in the first transaction terminal is greater than an electric quantity required by the hardware wallet for working; the transaction feedback information includes an identifier of the target account, the target account is an account on the first transaction terminal, and the transaction feedback information is configured to instruct the second transaction terminal to send the transaction request and the identifier of the target account to a digital currency server; and so that the digital currency server performs a digital currency transaction between the first transaction terminal and the second transaction terminal according to the transaction request and the identifier of the target account.

As a possible implementation, after the first transaction terminal is powered off, when a transaction request sent by the second transaction terminal is received, the first transaction terminal sends, by the SE, transaction feedback information to the second transaction terminal in response to the transaction request sent by the second transaction terminal.

It should be noted that, the unpowered shut off of the first transaction terminal means that first transaction terminal is shut off because there is no power, the "unpowered" herein means that the battery power is insufficient to support the power-on operation, but can supply power for the operation of the SE chip in the first transaction terminal. That is, in this case, the SE chip may still communicate with the second transaction terminal by the NFC technology.

In some embodiments, the SE chip is built in the first transaction terminal, and the operation and maintenance personnel deploy a card application in the SE chip in advance. Therefore, the SE chip may sense the state of the first transaction terminal (i.e. whether the first transaction terminal is in a powered state or an unpowered state). After the first transaction terminal is unpowered, the first transaction terminal activates the card application in the SE in a contactless manner (i.e. in a contactless activation manner), so that the first transaction terminal in an unpowered can still receive the transaction request sent by the second transaction terminal in a non-contact manner (such as a NFC manner), and feed back transaction feedback information to the second transaction terminal. Compared with the transaction feedback information fed back by the first transaction terminal in a powered state, the transaction feedback information in an unpowered state not only includes a digital currency payment identifier and an identifier of the target account, but also carries an unpowered payment identifier so as to prompt the second transaction terminal that the counterpart is making an unpowered payment. After the first transaction terminal is powered on, the first transaction terminal performs contactless deactivation on the card application in the SE, so that the first transaction terminal can perform conventional payment in a NFC manner. The contactless activation refers to performing activation in a non-contact manner, and the contactless deactivation refers to performing deactivation in a non-contact manner.

Accordingly, after receiving the transaction feedback information sent by the first transaction terminal, the second transaction terminal forwards the transaction feedback information and the transaction request of the current transaction to the digital currency server by the network.

Step 205: the digital currency server receives the transaction request and the identifier of the target account sent by the second transaction terminal, and performs a digital currency transaction between the first transaction terminal and the second transaction terminal on the basis of the transaction request and the identifier of the target account.

As a possible implementation, the digital currency server receives the transaction request and the identifier of the target account sent by the second transaction terminal, so as to clarify both parties involved in the current transaction and the content of the current transaction. The digital currency server deducts the target account on the basis of the transaction information, and performs payment on the account corresponding to the second transaction terminal on the basis of the transaction information, so as to complete the digital currency transaction between the first transaction terminal and the second transaction terminal.

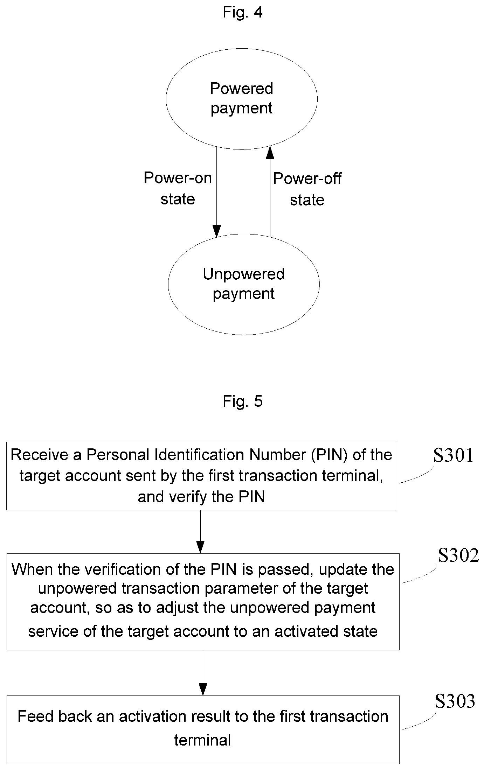

It can be understood that, the SE in the first transaction terminal may sense a power-on state or a power-off state of the first transaction terminal (including automatic shutdown due to low battery, or shutdown with a power supply, that is, a user actively shuts down when there is a power supply). As shown in Fig. 4, when the first transaction terminal is in a power-on state, the first transaction terminal performs powered payment; and when the first transaction terminal is in a power-off state, the first transaction terminal performs unpowered payment.

In a possible implementation, the method for the digital currency server to perform a digital currency transaction between the first transaction terminal and the second transaction terminal includes:
the digital currency server sends the transaction request to an operator backend system corresponding to the target account, so that the operator backend system corresponding to the target account updates a digital currency in the target account.

In some embodiments, after receiving the transaction request and an identifier of the target account sent by the second transaction terminal, the digital currency server may send transaction information to the operator backend system corresponding to the target account, so that the operator backend system corresponding to the target account updates the digital currency in the target account.

The operator backend system corresponding to the target account updates the digital currency in the target account includes: deducting a currency string in the target account, and increasing a currency string in the target account.

In some embodiments, in a scenario where the second transaction terminal is a receipt device and the first transaction terminal (i.e. the hardware wallet) is a payment device, the operator backend system corresponding to the target account may deduct the currency string in the target account, and the deducted amount is the amount of the transaction between the first transaction terminal and the second transaction terminal.

Accordingly, in a scenario where the second transaction terminal is a payment device and the first transaction terminal (i. e. the hardware wallet) is a receipt device, the operator backend system corresponding to the target account may increase a currency string in the target account, and the amount to be added is the amount of transaction between the first transaction terminal and the second transaction terminal.

In a possible implementation, the method for the digital currency server to perform a digital currency transaction between the first transaction terminal and the second transaction terminal includes:
The digital currency server sends the transaction request to the operator backend system corresponding to the target account, so that the operator backend system corresponding to the target account updates the digital currency in the target account, and an operator backend system corresponding to the second transaction terminal updates the digital currency in an account corresponding to the second transaction terminal.

In some embodiments, after receiving the transaction request and the identifier of the target account from the second transaction terminal, the digital currency server may send transaction information to the operator backend system corresponding to the target account, so that the operator backend system corresponding to the target account updates the digital currency in the target account, and the operator backend system corresponding to the second transaction terminal updates the digital currency in the account corresponding to the second transaction terminal.

The operator backend system corresponding to the target account updates the digital currency in the target account includes: deducting a currency string in the target account, and increasing a currency string in the target account.

Accordingly, the operator backend system corresponding to the second transaction terminal updates the digital currency in the account corresponding to the second transaction terminal includes: deducting the currency string in the account corresponding to the second transaction terminal, and increasing the currency string in the account corresponding to the second transaction terminal.

In some embodiments, in a scenario where the second transaction terminal is a receipt device and the first transaction terminal (i.e. the hardware wallet) is a payment device, the operator backend system corresponding to the target account may deduct the currency string in the target account, and the deducted amount is the amount of the transaction between the first transaction terminal and the second transaction terminal.

The operator backend system corresponding to the second transaction terminal can increase the currency string in the account corresponding to the second transaction terminal, and the increased amount is the amount of the transaction between the hardware wallet and the transaction initiating device.

Accordingly, in a scenario where the second transaction terminal is a payment device and the first transaction terminal (i. e. the hardware wallet) is a receipt device, the operator backend system corresponding to the target account may increase a currency string in the target account, and the amount to be added is the amount of transaction between the first transaction terminal and the second transaction terminal.

The operator backend system corresponding to the second transaction terminal may increase the currency string in the account corresponding to the second transaction terminal, and the deducted amount is the amount of the transaction between the first transaction terminal and the second transaction terminal.

In one possible implementation, the transaction method further includes:
when the operator backend system corresponding to the second transaction terminal successfully updates the digital currency in the account corresponding to the second transaction terminal, the second transaction terminal receives transaction success information sent by the operator backend system corresponding to the second transaction terminal, and displays the transaction success information.

The transaction initiating device displays the transaction success information may include: the second transaction terminal displays the transaction success information by a display, and plays back the transaction success information by an audio player, etc.

The embodiments provided in the present application have the following beneficial effects: when the first transaction terminal is in a power-on state, in response to an unpowered transaction enabling instruction of a target account, unpowered transaction enabling information is generated, and the unpowered transaction enabling information is sent to a digital currency server. Since the unpowered transaction enabling information includes an unpowered transaction parameter of the target account and an identifier of the target account, and the unpowered transaction enabling information is configured to instruct the digital currency server to set the unpowered transaction parameter of the target account and activate an unpowered payment service of the target account, in this case, the first transaction terminal has the capability of unpowered payment. Further, since the first transaction terminal has a SE, and the SE can work under very low power consumption (for example, the power consumption is lower than the preset power consumption), after the first transaction terminal is power off, in response to the transaction request sent by the second transaction terminal, the transaction feedback information may be sent to the second transaction terminal by the SE. The transaction feedback information includes an identifier of the target account; the transaction feedback information is configured to instruct the second transaction terminal to send the transaction request and the identifier of the target account to the digital currency server; and the digital currency server performs a digital currency transaction between the first transaction terminal and the second transaction terminal according to the transaction request and the identifier of the target account. In this way, the first transaction terminal can also make payments with the digital currency in the case of power off.

In some embodiments, as shown in Fig. 5, in order to activate the unpowered payment service of the target account, the digital currency transaction method provided in the embodiments of the present application further includes the steps 301-303 as follows.

Step 301: the digital currency server receives a Personal Identification Number (PIN) of the target account sent by the first transaction terminal, and verifies the PIN.

As a possible implementation, the digital currency server receives the PIN of the target account sent by the first transaction terminal, and verifies the PIN according to a pre-stored mapping relationship of PINs of a plurality of accounts.

Exemplarily, the digital currency server stores the PINs of the plurality of accounts, an account 1-PIN1, an account 2-PIN2 and an account 3-PIN3; and when the PIN received by the digital currency server is the same as the PIN3, the digital currency server determines that the verification of the PIN is passed. Accordingly, the digital currency server obtains the identifier of the target account, i.e. the account 3, and sends the identifier of the target account to the first transaction terminal.

Step 302: when verification of the PIN is passed, the digital currency server updates the unpowered transaction parameter of the target account, so as to adjust the unpowered payment service of the target account to an activated state.

In some embodiments, the unpowered transaction parameter includes an unpowered transaction limit (also referred to as a total limit of a password-free transaction) and an unpowered transaction times (also referred to as an upper limit of the number of unpowered transactions), and there is an initial unpowered payment transaction parameter when an unpowered payment service is enabled. Therefore, when the target account has adjusted the unpowered transaction parameter when enabling the unpowered payment service, the digital currency server updates the initial unpowered transaction parameter on the basis of the adjusted unpowered transaction parameter of the target account.

In some embodiments, when the verification of the PIN is not passed, the digital currency server feeds back a preset error code to the first transaction terminal.

It should be noted that the error code is preset in the digital currency server by the operation and maintenance personnel and is configured to indicate that the current transaction of the second transaction terminal fails.

Step 303: the digital currency server feeds back an activation result to the first transaction terminal.

As a possible implementation, the digital currency server feeds back an activation result to the first transaction terminal by the network, so as to indicate that the unpowered payment service of the target account of the first transaction terminal has been activated successfully.

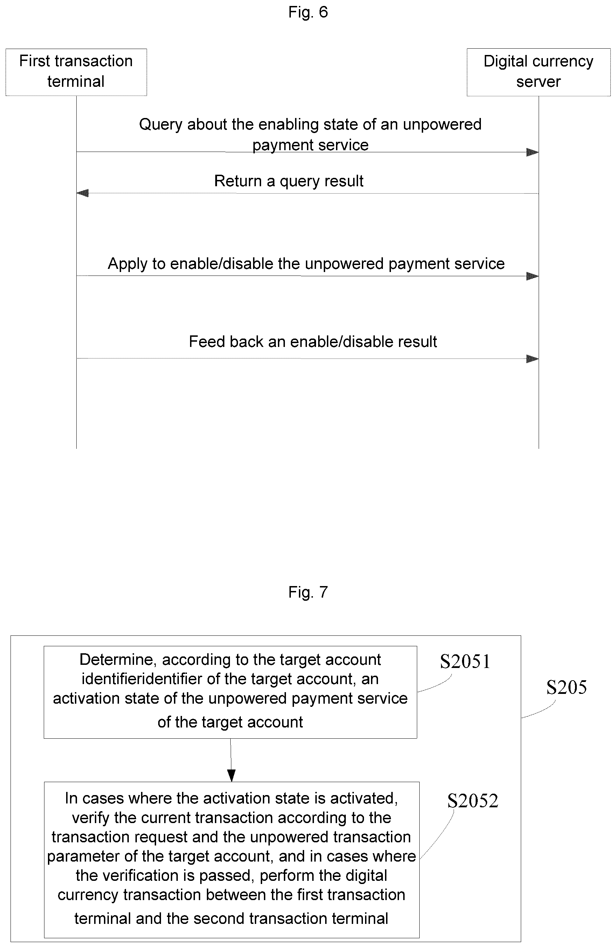

In some embodiments, as shown in Fig. 6, the target account may further query an enabling state (enabled or disabled) of the unpowered payment service by the digital currency APP in the first transaction terminal. For example, after receiving a request, initiated by the target account by the digital currency APP, for querying the state of the unpowered payment service, the first transaction terminal sends the request to the digital currency server. Accordingly, the digital currency server feeds back a query result (i.e. an enabling state of the unpowered payment service corresponding to the target account) to the first transaction terminal. In cases where the enabling state is enabled or disabled, when the target account applies for the enabling/disabling of the unpowered payment service, the first transaction terminal sends the unpowered payment transaction enabling information/unpowered payment transaction disabling information to the digital currency server. Accordingly, the digital currency server first verifies the PIN, further adjusts the unpowered payment service of the target account to be in an enabled/disabled state, and feeds back an enabled/disabled result to the first transaction terminal. when the unpowered payment service of the target account of the digital currency server is adjusted to be in an enabled state, the digital currency server also needs to update the initial unpowered transaction parameter on the basis of the adjusted unpowered transaction parameter of the target account, such as updating the unpowered transaction limit and the unpowered transaction times which are set by the target account.

In some embodiments, as shown in Fig. 7, in order to perform a digital currency transaction between the first transaction terminal and the second transaction terminal, the described step 205 provided in the embodiment of the present application includes steps 2051-2052 as follows:
Step 2051: the digital currency server determines, according to the identifier of the target account, an activation state of the unpowered payment service of the target account.

The activation state of the unpowered payment service includes activated (i.e. a state where the unpowered payment service is enabled) or deactivated (i.e. a state where the unpowered payment service is disabled).

As a possible implementation, after receiving the transaction request and the identifier of the target account sent by the second transaction terminal, the digital currency server queries whether the target account has enabled the unpowered payment service on the basis of the identifier of the target account.

As another possible implementation, the digital currency server determines whether the received transaction feedback information forwarded by the second transaction terminal carries a preset unpowered payment identifier, and if so, the digital currency server queries, on the basis of the identifier of the target account, whether the target account has enabled an unpowered payment service.

Step 2052: when the activation state is activated, the digital currency server verifies the current transaction according to the transaction request and the unpowered transaction parameter of the target account, and when the verification is passed, the digital currency transaction between the first transaction terminal and the second transaction terminal is performed.

As a possible implementation, when the digital currency server determines that the target account has enabled the unpowered payment service (i.e. the activation state of the unpowered payment service of the target account is activated), the unpowered payment transaction parameter of the target account is acquired from a database of the digital currency server. Further, the digital currency server verifies the current transaction on the basis of the unpowered transaction parameter of the target account, and performs the digital currency transaction between the first transaction terminal and the second transaction terminal when the verification is passed. For example, the digital currency server deducts the current transaction limit from the hardware wallet of the first transaction terminal, and forwards the current transaction limit to the account of the second transaction terminal.

In some embodiments, when the unpowered transaction limit is greater than or equal to the current transaction limit and the current transaction times is less than or equal to the unpowered transaction times, the digital currency server determines that the verification is passed.

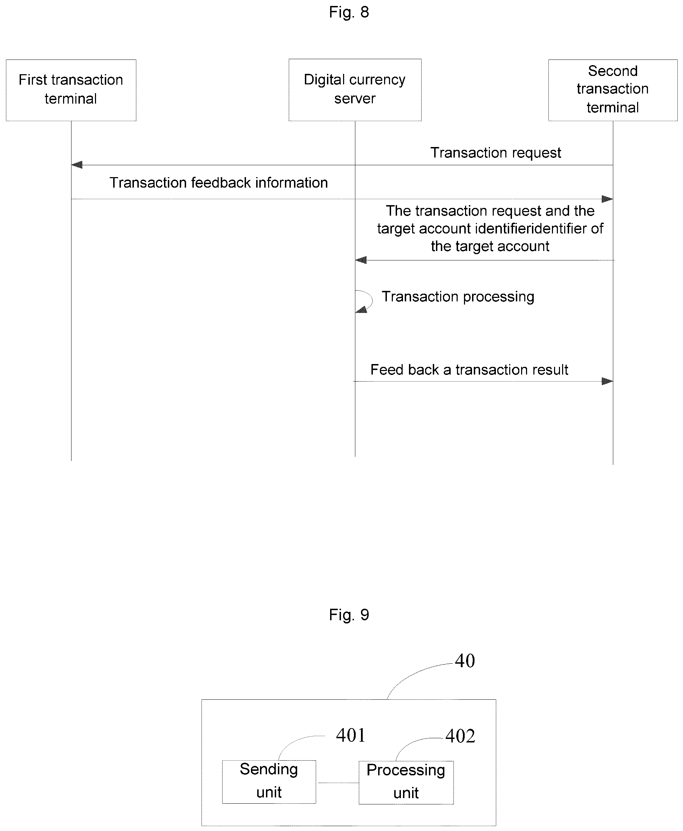

In some embodiments, as shown in Fig. 8, the second transaction terminal sends the transaction request to the first transaction terminal, and accordingly, in response to the transaction request sent by the second transaction terminal, the first transaction terminal sends transaction feedback information to the second transaction terminal by the SE. As the transaction feedback information is sent by the SE after the first transaction terminal has been powered off, the transaction feedback information carries a preset unpowered payment identifier. In this case, as the second transaction terminal is not powered off, the second transaction terminal may forward, by the network, the transaction feedback information with the unpowered payment identifier to the digital currency server. Accordingly, the digital currency server determines whether the received transaction feedback information forwarded by the second transaction terminal carries a preset unpowered payment identifier, and if so, the digital currency server queries, on the basis of the identifier of the target account, whether the target account has enabled an unpowered payment service. when the target account does not enable the unpowered payment service, the digital currency server feeds back a preset error code to the second transaction terminal. when the target account has enabled the unpowered payment service, the digital currency server determines whether the unpowered payment transaction limit is greater than or equal to the current transaction limit; and when the current transaction limit is greater than the unpowered payment transaction limit set by the target account, the digital currency server instructs the second transaction terminal to request the target account to enter a payment password on the second transaction terminal before performing the transaction. When the current transaction limit is less than or equal to the unpowered payment transaction limit set by the target account, the digital currency server further determines whether the current transaction times is less than or equal to the unpowered payment transaction times (also referred to as the number of payment attempts), and when the current transaction times is greater than the number of payment attempts, the digital currency server sends a preset error code to the second transaction terminal. When the current transaction times is less than or equal to the number of payment attempts, the digital currency server deducts the target account to obtain a transaction result, and sends the transaction result to the second transaction terminal.

In other embodiments, before the digital currency server deducts the target account, the digital currency server also needs to check whether the current transaction is compliant; if so, the digital currency server deducts the target account, and if not, the digital currency server sends a preset error code to the second transaction terminal.

The foregoing mainly introduces the solutions provided in the embodiments of the present application from a perspective of method. To implement the foregoing functions, cross-border payment apparatus or the electronic device includes corresponding hardware structures and/or software modules for performing the functions. A person skilled in the art should easily be aware that, in combination with units and algorithm steps of the examples described in embodiments disclosed in this specification, the present application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of the present application.

The embodiments of the present application can exemplarily divide functional modules of the digital currency transaction apparatus or the electronic device according to the described method, for example, the digital currency transaction apparatus or the electronic device may include various function modules corresponding to respective functions, or two or more functions may be integrated in one processing module. The above integrated module may be realized either in the form of hardware or in the form of software function module. It should be noted that the classification of the modules in the embodiments of the present application is schematic and is only a logical function division, and other division modes may also be implemented in practice.

For example, the embodiments of the present application further provide a digital currency transaction apparatus.

Fig. 9 is a block diagram illustrating a digital currency transaction apparatus according to an exemplary embodiment. With reference to Fig. 9, the digital currency transaction apparatus 40 is applied to a hardware wallet, and the hardware wallet is provided on a first transaction terminal; the digital currency transaction apparatus 40 includes a transmission unit 401.

The sending unit 401 is configured to send, when the first transaction terminal is in an unpowered state and in response to a transaction request sent by a second transaction terminal, transaction feedback information to the second transaction terminal by the hardware wallet, wherein the unpowered state indicates that the first transaction terminal is in a power-off state, an electric quantity of a power supply in the first transaction terminal is greater than an electric quantity required by the hardware wallet for working, the transaction feedback information includes an identifier of the target account, the target account is an account on the first transaction terminal, and the transaction feedback information is configured to instruct the second transaction terminal to send the transaction request and the identifier of the target account to a digital currency server; and so that the digital currency server performs a digital currency transaction between the first transaction terminal and the second transaction terminal according to the transaction request and the identifier of the target account.

In a possible implementation, the digital currency transaction apparatus 40 further includes a processing unit 402, wherein the processing unit 402 is configured to generate unpowered transaction enabling information in response to an unpowered transaction enabling instruction of the target account when the first transaction terminal is in a power-on state; the sending unit 401 is further configured to send the unpowered transaction enabling information to the digital currency server, the unpowered transaction enabling information includes an unpowered transaction parameter of a target account and an identifier of the target account; the unpowered transaction enabling information is configured to instruct the digital currency server to set the unpowered transaction parameter of the target account and activate the unpowered payment service of the target account.

In a possible implementation, the transaction feedback information further includes a digital currency payment identifier and an unpowered payment identifier; the processing unit 402 is configured to: acquire a state of the first transaction terminal by the hardware wallet, so as to determine that the first transaction terminal is in the unpowered state; receive, by the hardware wallet, a transaction request sent by the second transaction terminal; and feed back, to the second transaction terminal, the transaction feedback information including the digital currency payment identifier, the unpowered payment identifier and the identifier of the target account.

In a possible implementation, the processing unit 402 is configured to receive a personal identification number (PIN) of the target account; send the PIN to the digital currency server to obtain the identifier of the target account from the digital currency server; receive the unpowered transaction parameter set by the target account; and generate the unpowered transaction enabling information according to the unpowered transaction parameter and the identifier of the target account.

In a possible implementation, the hardware wallet includes a Secure Element (SE) in which a card application is deployed; the processing unit 402 is further configured to perform contactless activation on the card application in the SE after the first transaction terminal is powered off, and perform contactless deactivation on the card application in the SE after the first transaction terminal is powered on.

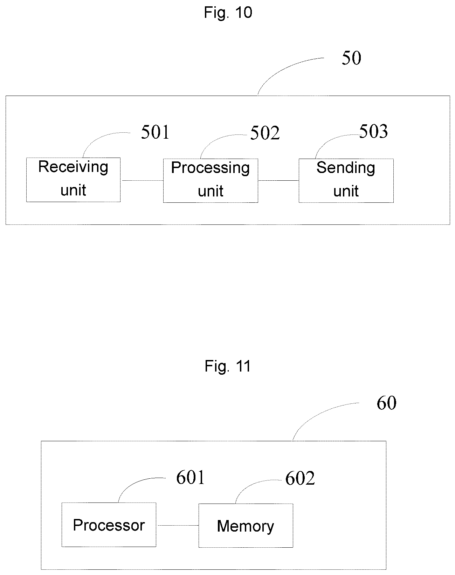

Fig. 10 is a block diagram of a digital currency transaction apparatus according to another exemplary embodiment. Refer to Fig. 10, the digital currency transaction apparatus 50 is applied to the digital currency server, and the digital currency transaction apparatus 50 includes a receiving unit 501 and a processing unit 502.

The receiving unit is configured to receive unpowered transaction enabling information sent by a first transaction terminal, wherein the unpowered transaction enabling information includes an unpowered transaction parameter of a target account and an identifier of the target account; the processing unit is configured to activate an unpowered payment service of the target account on the basis of the unpowered transaction parameter of the target account and the identifier of the target account; the receiving unit is further configured to receive a transaction request and the identifier of the target account sent by a second transaction terminal; and the processing unit is further configured to perform a digital currency transaction between the first transaction terminal and the second transaction terminal on the basis of the transaction request and the identifier of the target account.

In a possible implementation, the receiving unit 501 is further configured to: receive a personal identification number (PIN) of the target account sent by the first transaction terminal; the processing unit 502 is further configured to verify the PIN; and the processing unit 502 is further configured to obtain the identifier of the target account when verification of the PIN is passed, and send the identifier of the target account to the first transaction terminal.

In a possible implementation, the processing unit 502 is configured to update the unpowered transaction parameter of the target account when the verification of the PIN is passed, so as to adjust the unpowered payment service of the target account to an activated state; and feed back an activation result to the first transaction terminal.

In a possible implementation, the processing unit 502 is configured to determine the activation state of the unpowered payment service of the target account according to the identifier of the target account; when the activation state is activated, verify a current transaction according to the transaction request and the unpowered transaction parameter of the target account, and perform the digital currency transaction between the first transaction terminal and the second transaction terminal when the verification is passed.

In a possible implementation, the unpowered transaction parameter includes an unpowered transaction limit and a transaction times; the processing unit 502 is configured to determine that the verification is passed when the unpowered transaction limit is greater than or equal to the current transaction limit and the current transaction times is less than or equal to the unpowered transaction times.

In a possible implementation, the processing unit 502 is configured to send the transaction request to the operator backend system corresponding to the target account, so that the operator backend system corresponding to the target account updates a digital currency in the target account.

In a possible implementation, the processing unit 502 is configured to send the transaction request to the operator backend system corresponding to the target account, so that the operator backend system corresponding to the target account updates the digital currency in the target account, and an operator backend system corresponding to the second transaction terminal updates the digital currency in an account corresponding to the second transaction terminal.

In a possible implementation, the digital currency transaction apparatus further includes a sending unit 503; after performing the digital currency transaction between the first transaction terminal and the second transaction terminal, the sending unit 503 is configured to feed back a transaction result to the second transaction terminal; the transaction result is configured to reflect that the digital currency server successfully performs the digital currency transaction between the first transaction terminal and the second transaction terminal.

With respect to the apparatus in the foregoing embodiments, the manner in which the modules execute the operations has been described in details in the embodiments of the method, and is not described in detail herein.

Fig. 11 is a block diagram illustrating an electronic device according to an exemplary embodiment. As shown in Fig. 11, the electronic device 60 includes, but is not limited to, a processor 601 and a memory 602.

The memory 602 is configured to store the executable instructions of the processor 601. It can be understood that the processor 601 is configured to execute instructions to implement the digital currency transaction method in the foregoing embodiment.

It should be noted that, a person skilled in the art may understand that the structure of the electronic device shown in Fig. 11 does not limit the electronic device, and the electronic device may include more or fewer components than those shown in Fig. 11, or be combined with some components, or have different component arrangements.

As a control center of the electronic device, the processor 601 connects to various parts of the entire electronic device by various interfaces and lines, and performs various functions and data processing of the electronic device by running or executing a software program and/or a module stored in the memory 602 and invoking data stored in the memory 602, so as to perform overall monitoring on the electronic device. The processor 601 may include one or more processing units. In some embodiments, the processor 601 may integrate the application processor and the modem processor, where the application processor mainly processes an operating system, a user interface, an application, and the like, and the modem processor mainly processes wireless communication. It may be understood that the modem processor may alternatively not be integrated into the processor 601.

The memory 602 may be used to store a software program and various data. The memory 602 may mainly include a program storage area and a data storage area, where the program storage area may store an operating system, an application program (such as a receiving module, an acquisition module and a payment module) required by at least one functional module, etc. In addition, the memory 602 may include a high-speed random access memory, and can further include a non-volatile memory, for example, at least one magnetic disk storage device, a flash memory device, or another volatile solid-state storage device.

In some embodiments, a computer-readable storage medium (e.g., a non-transitory computer-readable storage medium) including instructions is also provided, for example, a memory 602 including instructions, wherein the instructions can be executed by the processor 601 of the electronic device 60 to implement the digital currency transaction method in the described embodiments.

In some embodiments, the processing functions of the sending unit 401 and the processing unit 402 in the digital currency transaction apparatus 40 may all be implemented by the processor 601 in Fig. 11 by invoking a computer program stored in the memory 602. For an execution process, reference may be made to the description of the digital currency transaction method in the foregoing embodiment, and details are not described herein again.

In some embodiments, the processing functions of the receiving unit 501, the processing unit 502 and the sending unit 503 in the digital currency transaction apparatus 50 may all be implemented by the processor 601 in Fig. 11 by invoking a computer program stored in the memory 602. For an execution process, reference may be made to the description of the digital currency transaction method in the foregoing embodiment, and details are not described herein again.

In some embodiments, the computer readable storage medium may be a non-transitory computer readable storage medium, for example, the non-transitory computer readable storage medium may be a read-only memory (ROM), a random access memory (RAM), a CD-ROM, a magnetic tape, a floppy disk, an optical data storage device, etc.

In some embodiments, the embodiments of the present disclosure further provide a computer program product including one or more instructions which can be executed by the processor 601 of the electronic device 60, so as to implement the digital currency transaction method of the above embodiments.

It should be noted that, when one or more instructions in the computer readable storage medium or one or more instructions in the computer program product are executed by the processor 601 of the electronic device 60, the processes in the foregoing embodiments of the digital currency transaction method are implemented, and the same technical effect as the foregoing digital currency transaction method can be achieved, which is not described herein again to avoid repetition.

By means of the foregoing descriptions about the implementations, a person skilled in the art can clearly understand that, for the purpose of convenient and brief description, division into the foregoing functional modules is used as an example for illustration. In actual application, the foregoing functions can be allocated to different functional modules to be implemented as required, that is, the inner structure of the apparatus is divided into different functional modules to implement all or some of the functions described above.

In some embodiments of the present disclosure, it should be understood that the disclosed apparatus and method may be implemented in other ways. For example, the described apparatus embodiments are merely examples. For example, division into the modules or units is merely logical function division, or may be other division in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate components may or may not be physically separate, and components displayed as units may be one or more physical units, and may be located in one place, or may be distributed on a plurality of different places. Some or all of the units may be selected according to actual needs to achieve the payment method of the scheme of the present embodiment.

In addition, the functional units in the embodiments of the present disclosure may be integrated into one processing unit, or each of the units may exist alone physically, or two or more of the units are integrated into one unit. The integrated unit may be implemented in the form of hardware, and may also be implemented in the form of a software functional unit.

When the integrated unit is implemented in the form of a software functional unit and is sold or used as an independent product, the integrated unit can be stored in a readable storage medium. On the basis of such understanding, the part of the technical solutions of the embodiments of the present disclosure that contributes in essence or to the prior art or all or part of the technical solutions may be embodied in the form of a software product stored in a storage medium. The software product is stored in a storage medium and includes several instructions for instructing a device (which may be a single-chip microcomputer, a chip or the like) or a to perform all or some of the steps of the methods described in embodiments of the present disclosure. The foregoing storage medium includes any medium that can store program code, such as a USB flash drive, a removable hard disk, a ROM, a RAM, a magnetic disk, or an optical disc.

The foregoing descriptions are merely specific implementations of the present disclosure, but are not intended to limit the protection scope of the present disclosure. Any variation or replacement within the technical scope disclosed in the present disclosure shall fall within the protection scope of the present disclosure. Therefore, the protection scope of the present disclosure shall be subject to the protection scope of the claims.

## Claims

1. A digital currency transaction method, applied to a hardware wallet which is provided in a first transaction terminal, and the method comprises:
when the first transaction terminal is in an unpowered state, sending, in response to a transaction request sent by a second transaction terminal, transaction feedback information to the second transaction terminal by the hardware wallet, wherein the unpowered state indicates that the first transaction terminal is in a power-off state, an electric quantity of a power supply in the first transaction terminal is greater than an electric quantity required by the hardware wallet for working;
the transaction feedback information comprises an identifier of a target account, the target account is an account on the first transaction terminal, and the transaction feedback information is configured to instruct the second transaction terminal to send the transaction request and the identifier of the target account to a digital currency server; and so that the digital currency server performs a digital currency transaction between the first transaction terminal and the second transaction terminal according to the transaction request and the identifier of the target account.

2. The digital currency transaction method as claimed in claim 1, further comprising:
when the first transaction terminal is in a power-on state, generating unpowered transaction enabling information in response to an unpowered transaction enabling instruction of the target account; and
sending the unpowered transaction enabling information to the digital currency server, wherein the unpowered transaction enabling information comprises an unpowered transaction parameter of the target account and the identifier of the target account, and the unpowered transaction enabling information is configured to instruct the digital currency server to set the unpowered transaction parameter of the target account and activate an unpowered payment service of the target account.

3. The digital currency transaction method as claimed in claim 1 or 2, wherein the transaction feedback information further comprises a digital currency payment identifier and an unpowered payment identifier; and sending, in response to the transaction request sent by the second transaction terminal, transaction feedback information to the second transaction terminal by the hardware wallet comprises:
acquiring a state of the first transaction terminal by the hardware wallet, so as to determine that the first transaction terminal is in the unpowered state;
receiving, by the hardware wallet, the transaction request sent by the second transaction terminal; and
feeding back, to the second transaction terminal, the transaction feedback information comprising the digital currency payment identifier, the unpowered payment identifier and the identifier of the target account.

4. The digital currency transaction method as claimed in claim 2, wherein generating the unpowered transaction enabling information in response to the unpowered transaction enabling instruction of the target account comprises:
receiving a Personal Identification Number (PIN) of the target account;
sending the PIN to the digital currency server to obtain the identifier of the target account from the digital currency server;
receiving the unpowered transaction parameter set by the target account; and
generating the unpowered transaction enabling information according to the unpowered transaction parameter and the identifier of the target account.

5. The digital currency transaction method as claimed in any one of claims 1-4, wherein the hardware wallet comprises a Secure Element (SE) in which a card application is deployed, and the method further comprises:
after the first transaction terminal is powered off, performing contactless activation on the card application in the SE; and
after the first transaction terminal is powered on, performing contactless deactivation on the card application in the SE.

6. A digital currency transaction method, applied to a digital currency server, comprising:
receiving unpowered transaction enabling information sent by a first transaction terminal, wherein the unpowered transaction enabling information comprises an unpowered transaction parameter of a target account and an identifier of the target account;
activating an unpowered payment service of the target account on the basis of the unpowered transaction parameter of the target account and the identifier of the target account;
receiving a transaction request and the identifier of the target account sent by a second transaction terminal; and
performing a digital currency transaction between the first transaction terminal and the second transaction terminal on the basis of the transaction request and the identifier of the target account.

7. The digital currency transaction method as claimed in claim 6, further comprising:
receiving a Personal Identification Number (PIN) of the target account sent by the first transaction terminal;
verifying the PIN;
obtaining the identifier of the target account when verification of the PIN is passed; and
sending the identifier of the target account to the first transaction terminal.

8. The digital currency transaction method as claimed in claim 7, wherein activating the unpowered payment service of the target account on the basis of the unpowered transaction parameter of the target account and the identifier of the target account comprises:
when the verification of the PIN is passed, updating the unpowered transaction parameter of the target account, so as to adjust the unpowered payment service of the target account to an activated state; and
feeding back an activation result to the first transaction terminal.

9. The digital currency transaction method as claimed in any one of claims 6-8, wherein performing the digital currency transaction between the first transaction terminal and the second transaction terminal on the basis of the transaction request and the identifier of the target account comprises:
determining an activation state of the unpowered payment service of the target account according to the identifier of the target account;
when the activation state is activated, verifying a current transaction according to the transaction request and the unpowered transaction parameter of the target account; and
performing the digital currency transaction between the first transaction terminal and the second transaction terminal when verification is passed.

10. The digital currency transaction method as claimed in claim 9, wherein the unpowered transaction parameter comprises an unpowered transaction limit and an unpowered transaction times, the transaction request comprises a current transaction limit; and verifying the current transaction according to the transaction request and the unpowered transaction parameter of the target account comprises:
determining that the verification is passed when the unpowered transaction limit is greater than or equal to the current transaction limit, and the current transaction times is less than or equal to the unpowered transaction times.

11. The digital currency transaction method as claimed in claim 10, wherein performing the digital currency transaction between the first transaction terminal and the second transaction terminal comprises:
sending the transaction request to an operator backend system corresponding to the target account, so that the operator backend system corresponding to the target account updates a digital currency in the target account.

12. The digital currency transaction method as claimed in claim 10, wherein performing the digital currency transaction between the first transaction terminal and the second transaction terminal comprises:
sending the transaction request to the operator backend system corresponding to the target account, so that the operator backend system corresponding to the target account updates a digital currency in the target account, and an operator backend system corresponding to the second transaction terminal updates a digital currency in an account corresponding to the second transaction terminal.

13. The digital currency transaction method as claimed in any one of claims 6-10, wherein after performing the digital currency transaction between the first transaction terminal and the second transaction terminal, the method further comprises:
feeding back a transaction result to the second transaction terminal, wherein the transaction result is configured to reflect that the digital currency server successfully performs the digital currency transaction between the first transaction terminal and the second transaction terminal.

14. A digital currency transaction system, comprising a first transaction terminal, a second transaction terminal and a digital currency server, wherein the first transaction terminal comprises a hardware wallet;
the first transaction terminal is configured to generate unpowered transaction enabling information in response to an unpowered transaction enabling instruction of a target account when the first transaction terminal is in a power-on state, wherein the unpowered transaction enabling information comprises an unpowered transaction parameter of the target account and an identifier of the target account, and the unpowered transaction enabling information is configured to instruct the digital currency server to set the unpowered transaction parameter of the target account and activate an unpowered payment service of the target account;
the first transaction terminal is further configured to send the unpowered transaction enabling information to the digital currency server;
the second transaction terminal is configured to send a transaction request to the first transaction terminal after the first transaction terminal is powered off;
the first transaction terminal is further configured to send, in response to the transaction request sent by the second transaction terminal, transaction feedback information to the second transaction terminal by the hardware wallet, wherein the transaction feedback information comprises the identifier of the target account;
the second transaction terminal is further configured to send the transaction request and the identifier of the target account to the digital currency server; and
the digital currency server is configured to perform a digital currency transaction between the first transaction terminal and the second transaction terminal according to the transaction request and the identifier of the target account.

15. A digital currency transaction apparatus, applied to a hardware wallet, wherein the hardware wallet is provided to a first transaction terminal, and the digital currency transaction apparatus comprises a sending unit;
the sending unit is configured to send, when the first transaction terminal is in an unpowered state and in response to a transaction request sent by a second transaction terminal, transaction feedback information to the second transaction terminal by the hardware wallet, wherein the unpowered state indicates that the first transaction terminal is in a power-off state, an electric quantity of a power supply in the first transaction terminal is greater than an electric quantity required by the hardware wallet for working,
the transaction feedback information comprises an identifier of the target account, the target account is an account on the first transaction terminal, and the transaction feedback information is configured to instruct the second transaction terminal to send the transaction request and the identifier of the target account to a digital currency server; and so that the digital currency server performs a digital currency transaction between the first transaction terminal and the second transaction terminal according to the transaction request and the identifier of the target account.

16. A digital currency transaction apparatus, applied to a digital currency server, the digital currency transaction apparatus comprising a receiving unit and a processing unit;
the receiving unit is configured to receive unpowered transaction enabling information sent by a first transaction terminal, wherein the unpowered transaction enabling information comprises an unpowered transaction parameter of a target account and an identifier of the target account;
the processing unit is configured to activate an unpowered payment service of the target account on the basis of the unpowered transaction parameter of the target account and the identifier of the target account;
the receiving unit is further configured to receive a transaction request and the identifier of the target account sent by a second transaction terminal; and
the processing unit is further configured to perform a digital currency transaction between the first transaction terminal and the second transaction terminal on the basis of the transaction request and the identifier of the target account.

17. An electronic device, comprising: a memory, a processor and a computer program stored on the memory and capable of running on the processor, wherein the computer program, when executed by the processor, implements the digital currency transaction method according to any one of claims 1-5 or the digital currency transaction method according to any one of claims 6-13.

18. A computer readable storage medium, storing a computer program which, when executed by a processor, implements the digital currency transaction method according to any one of claims 1-5 or the digital currency transaction method according to any one of claims 6-13.
